# EUROPÄISCHE PATENTANMELDUNG

(11) **EP 0 784 922 A2**
(43) Veröffentlichungstag der Anmeldung: **23.07.1997**
(21) Anmeldenummer: 97100820.6
(22) Anmeldetag: 20.01.1997
(51) Int. Cl.: A01G 1/12, E01H 1/08

(54) **Mobile Vorrichtung zum Ansaugen von Laub oder dergleichen Gut**

(30) Priorität: 20.01.1996 DE 29600972 U
(71) Anmelder: Umwelt-Technics-Nord GmbH, D-22851 Norderstedt (DE)
(72) Erfinder: Gronholz, Claus, 22851 Norderstedt (DE)
(74) Vertreter: Patentanwälte Hauck, Graalfs, Wehnert, Döring, Siemons

(57) **Zusammenfassung**

Mobile Vorrichtung zum Ansaugen von Laub oder dergleichen Gut, mit einem Gehäuse, in dem ein Sauglüfterrad über eine Welle drehbar gelagert ist, einem mit der Welle verbindbaren Antriebsmotor, einer Ansaugöffnung im Gehäuse und einem mit dem Gehäuseinneren verbundenen Sammelraum für das Gut, der luftdurchlässige Wände aufweist, wobei das nach oben offene Gehäuse Mittel zur Anbringung der Haube eines auf das Gehäuse aufsetzbaren Rasenmähers aufweist und ein Adapter vorgesehen ist zur Kopplung des Messers des Rasenmähers mit der Welle bzw. dem Sauglüfterrad.

## Beschreibung

Die Erfindung bezieht sich auf eine mobile Vorrichtung zum Ansaugen von Laub oder dergleichen Gut nach dem Oberbegriff des Anspruchs 1.

Es ist bekannt, zum Entfernen von Laub von kleinen oder mittleren Flächen sogenannte Laubsauger einzusetzen. Sie bestehen aus einem vorzugsweise fahrbaren Gehäuse, in dem ein von einem geeigneten Motor angetriebenes Sauglüfterrad angeordnet ist. An das Gehäuse ist zumeist ein Saugschlauch mit Saugdüse angeschlossen. Ferner ist ein Sammelraum vorgesehen, der sich entweder innerhalb des Gehäuses befindet oder am Gehäuse angeschlossen wird zur Aufnahme des angesaugten Laubs, das mit Hilfe des Lüfterrades gleichzeitig mehr oder weniger gehäckselt wird. Die Funktion eines derartigen Laubsaugers ist einwandfrei. Aus Kostengründen werden jedoch für Laubsauger für die private Nutzung meist relativ schwache Antriebe eingesetzt. Diese sind daher nicht in der Lage, für ein ausreichendes und wirksames Absaugen von Laub Sorge zu tragen.

Der Erfindung liegt daher die Aufgabe zugrunde, eine mobile Vorrichtung zum Ansaugen von Laub oder dergleichen Gut zu schaffen, die trotz hoher Saugleistung mit einem relativ geringen Aufwand hergestellt werden kann.

Diese Aufgabe wird durch die Merkmale des Anspruchs 1 gelöst.

Bei der erfindungsgemäßen Vorrichtung weist der Laubsauger keinen eigenen Antrieb auf, dieser wird vielmehr von dem Antrieb eines Rasenmähers gebildet, der mit der erfindungsgemäßen Vorrichtung kombiniert wird. Die Erfindung geht von der Erkenntnis aus, daß der Benutzer eines Laubsaugers in der Regel auch einen Rasenmäher besitzt. Rasenmäher haben einen annähernd standardisierten Aufbau. Sie weisen eine Haube auf, die über Räder am Untergrund abgestützt ist. In der Haube ist über eine vertikale Welle ein Schneidmesser gelagert, das über einen elektromotorischen oder mit Brennstoff betriebenen auf der Haube angeordneten Motor angetrieben ist.

Bei der erfindungsgemäßen Vorrichtung wird die Haube des Rasenmähers auf das nach oben offene Gehäuse gesetzt. Das Lüfterrad des Saugers wird über einen Adapter vom Messer des Mähers angetrieben. Das Lüfterrad kann eine Welle aufweisen, die am oberen Ende mit einem Adapter versehen ist, der mit dem Messer des Rasenmähers in koppelndem Eingriff bringbar ist.

Der Antriebsmotor eines Rasenmähers ist mit einer ausreichenden Leistung versehen, die vollständig ausreicht, ein Lüfterrad so anzutreiben, daß auch eine ausreichende Saugleistung zur Verfügung gestellt wird. Das Lüfterrad kann nach einer Ausgestaltung der Erfindung ein Axiallüfterrad oder auch ein Radiallüfterrad sein, das vorzugsweise unmittelbar auf der vertikalen Welle sitzt.

Die erfindungsgemäße Vorrichtung hat darüber hinaus den Vorteil, daß das angesaugte Laub nicht nur vom Lüfterrad, sondern auch vom Messer des Rasenmähers gehäckselt wird und daher in relativ kleiner Form in den Sammelraum gelangt. Dieser kann von dem Fangkorb, der normalerweise zu einem Rasenmäher gehört, gebildet sein. Alternativ kann auch ein größerer Korb zur Verfügung gestellt werden, um eine möglichst große Menge an gehäckseltem Laub aufnehmen zu können.

Für die vorzugsweise mehr oder weniger dichte Anbringung der Rasenmäherhaube am Gehäuse sind verschiedene Möglichkeiten denkbar. Eine besteht erfindungsgemäß darin, daß das Gehäuse an der oberen Außenseite einen umlaufenden Flansch für die annähernd dichte Abstützung der Haube des Rasenmähers aufweist. Der Flansch kann eine gewisse radiale Erstreckung haben, so daß unterschiedlich breite Hauben aufgenommen werden.

Am Gehäuse ist nach einer weiteren Ausgestaltung der Erfindung vorzugsweise eine Befestigungsmöglichkeit vorzusehen, um die Rasenmäherhaube mit dem Gehäuse lösbar zu verbinden. Diese kann nach einer Ausgestaltung der Erfindung Gummizüge oder dergleichen aufweisen, um eine sichere und gleichzeitig schnell montier- und demontierbare Anbringung des Rasenmähers am Gehäuse zu ermöglichen.

Es ist denkbar, die Kopplung zwischen Rasenmähermesser und Adapter formschlüssig vorzusehen. Sie hätte den Vorteil, daß gleichzeitig eine Art Rutschkupplung gebildet wäre. Es ist jedoch nach einer Ausgestaltung der Erfindung vorzuziehen, wenn die Kopplung zwischen Rasenmähermesser und Adapter kraftschlüssig erfolgt. Vorzugsweise ist der Adapter so ausgebildet, daß er das Rasenmesser klauenartig von unten umfaßt.

Der Abstand zwischen dem Messer und der unteren Kante der Haube ist bei den verschiedenen Typen von Rasenmähern annähernd gleich. Der Adapter kann daher so ausgelegt werden, daß er in jedem Fall kraftschlüssig mit dem Rasenmähermesser in Eingriff gesetzt wird, wenn seine Haube auf das Gehäuse aufgesetzt wird.

Die Drehrichtung eines Rasenmähermessers kann unterschiedlich sein. Daher wird das Lüfterrad vorzugsweise umdrehbar an der Welle angebracht. Es ist auch denkbar, den Adapter lösbar mit der Welle zu verbinden und die Welle mit Lüfterrad umzudrehen, um eine Anpassung an die Drehrichtung des Rasenmähermessers zu erhalten.

Das Gehäuse des erfindungsgemäßen Laubsaugers wird vorzugsweise über Rollen oder Räder vorwärtsbewegt. Die Räder sind vorzugsweise sowohl schwenkbar als auch höhenverstellbar gelagert. Bezüglich der Schwenkbarkeit kann eine Feststellmöglichkeit vorgesehen werden.

Bei einer Ausführungsform der Erfindung hat das Gehäuse des Saugers keine Rollen, sondern ist an der Haube des Rasenmähers aufgehängt. Die Außenkontur des Gehäuses befindet sich innerhalb der Begrenzung, welche von den Rollen des Mähers gebildet ist. Diese Rollen werden z.B. auf maximale Höhe gestellt, und das Gehäuse wird mittels geeigneter, lösbarer Befestigungen, die die Haube des Mähers seitlich und von oben umgreifen, am Mäher angebracht. Die Befestigungen können schwenkbare, in sich federnde Bügel oder dergleichen sein.

Das Sauglüfterrad ist vorzugsweise mittels eines Wellenstumpfes in einem Lager am Boden des Gehäuses gelagert. Der Adapter kann permanent mit dem Messer des Lüfters verbunden, z.B. verschraubt sein. Es kann Schraubmittel aufweisen, um im Bedarfsfall das Sauglüfterrad mit dem Adapter zu verbinden, z.B. mit Schraubbolzen.

Der erfindungsgemäße Laubsauger kann auch als Flächensauger eingesetzt werden, wenn nach einer Ausgestaltung der Erfindung in der Bodenwand des Gehäuses mindestens eine verschließbare Ansaugöffnung vorgesehen ist. In diesem Fall empfiehlt sich, das Gehäuse möglichst tiefliegend über den Boden zu bewegen, damit ausreichend Unterdruck im Bereich des Gehäuses am Boden entsteht. In diesem Fall ist die Ansaugöffnung, an die üblicherweise der Saugschlauch angeschlossen wird, verschlossen. Wird die Flächensaugmöglichkeit nicht benötigt, können durch geeignete Schieber oder dergleichen die Ansaugöffnungen am Boden verschlossen werden.

Der Ansaugschlauch hat normalerweise am vorderen Ende eine Saugdüse, um über diese das Laub vom Boden aufzunehmen. Nach einer Ausgestaltung der Erfindung weist die Saugdüse zwischen den Enden einen Bereich größeren Querschnitts auf. An der Unterseite dieses Bereichs ist ein Auffangbehälter abnehmbar angebracht. Im Bereich größeren Querschnitts kommt es zu einer Geschwindigkeitsreduzierung der Saugströmung. Mitgerissene schwere Teile, wie Steine oder Metallteile, können dann durch Schwerkraft in den Auffangbehälter fallen.

Bei einer anders ausgestalteten Saugdüse ist ein Rad drehbar gelagert, dessen Achse in Gebrauchslage horizontal liegt. Das Rad ist seitlich mit radialen Rippen oder dergleichen versehen. Mit Hilfe des Rades läßt sich ein gleichmäßiger Abstand zur Bodenoberfläche erhalten, wobei die radialen Rippen dafür sorgen, daß diffuserartige Ansaugkanäle gebildet sind.

Insbesondere bei dem angehängten Gehäuse des Saugers, das naturgemäß flach ausgeführt ist, ist es vorteilhaft, zusätzlich Mittel vorzusehen, um das angesaugte Laub zu häckseln, bevor es das Sauglüfterrad erreicht. Zu diesem Zweck können am Lüfterrad Schneiden an der Unterseite angebracht sein, oder auch federnde Drähte, ähnlich dem Prinzip sogenannter Kantenschneider, die mit einem schleudernden bzw. rotierenden Draht arbeiten.

Die Erfindung wird nachfolgend anhand von Zeichnungen näher erläutert.
- Fig. 1: zeigt schematisch die Seitenansicht bzw. den Schnitt eines Laubsaugers nach der Erfindung.
- Fig. 2: zeigt perspektivisch das untere Gehäuseteil des Laubsaugers nach Fig. 1.
- Fig. 3: zeigt im Schnitt schematisch den unteren Teil des Laubsaugers nach Fig. 1 in einer abgewandelten Ausführungsform.
- Fig. 4: zeigt vergrößert ein Rad für den Laubsauger nach den Figuren 1 und 2.
- Fig. 5: zeigt schematisch eine Düse für einen Laubsauger nach den Figuren 1 und 2.
- Fig. 6: zeigt schematisch eine abgewandelte Saugdüse für den Laubsauger nach den Figuren 1 und 2.
- Fig. 7: zeigt einen Schnitt durch das Gehäuse mit Sauglüfterrad einer zweiten Ausführungsform der Erfindung.
- Fig. 8: zeigt die Draufsicht auf das Gehäuse von Fig. 7 ohne Lüfterrad.
- Fig. 9: zeigt einen Schnitt durch den Adapter zur Verbindung von Messer und Lüfterrad der Ausführungsform nach Fig. 7.
- Fig. 10: zeigt eine dritte Ausführungsform eines Saugers als Bausatz zur Verbindung mit einem Rasenmäher.
- Fig. 11: zeigt eine Einzelheit von Fig. 10.

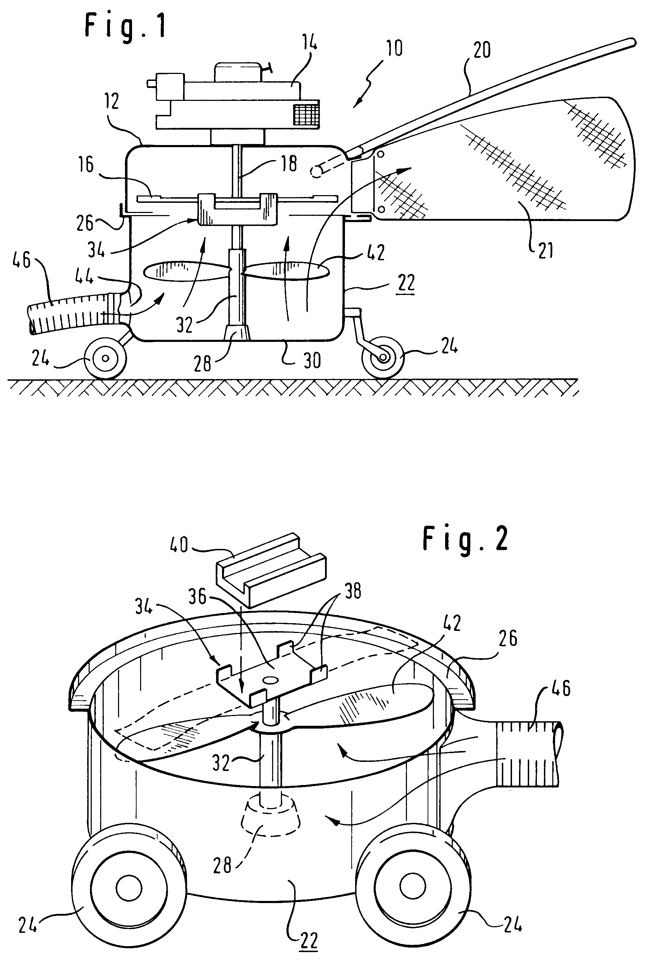

In Fig. 1 ist ein Rasenmäher 10 herkömmlicher Bauart dargestellt mit einer Haube 12, einem Antrieb 14 mit Verbrennungsmotor, einem Schneidmesser 16 innerhalb der Haube, das über eine vertikale Welle 18 mit dem Antrieb 14 verbunden ist. Ein Zug- bzw. Schubrahmen 20 ist üblicherweise an die Haube 12 seitlich angelenkt. An einer Seite des Rasenmähers ist ein Fangkorb 22 angeordnet, vorzugsweise unterhalb des Rahmens 20.

Man erkennt in Fig. 1 ferner ein nach oben offenes topfartiges Gehäuse 22, das mittels vier Rollen 24 am Boden abgestützt ist. Es weist am oberen offenen Ende einen umlaufenden nach außen weisenden Flansch 26 auf, auf dem sich die Haube 12 abstützt. Die radiale Erstreckung des Flansches 26 kann derart sein, daß verschiedene Breitenabmessungen der Haube aufgenommen werden. Im Bereich des Flansches bzw. des Aufstands der Haube 12 können geeignete Dichtvorkehrungen vorgesehen werden, um die Haube 12 annähernd dicht auf dem Gehäuse 22 anzubringen. Im Gehäuse 22 ist mittels eines Lagers 28, der auf der Bodenwand 30 angebracht ist, eine Welle 32 drehbar gelagert. Wie aus Fig. 2 hervorgeht, ist am oberen Ende der Welle eine Aufnahme 34 angebracht. Sie besteht aus einem plattenförmigen Abschnitt 36, der an den Enden der Längskanten nach oben stehende Ansätze 38 aufweist. Sie können einteilig mit dem Plattenabschnitt 36 aus Flachmaterial geformt sein. In die Aufnahme 34 wird ein Adapter 40 passend eingesetzt. Er ist ein im Querschnitt U-förmiges Kunststoffteil.

Wie aus Fig. 1 zu erkennen, wird das Messer des Rasenmähers 16 von unten vom Adapter 40 klauenartig umgriffen, so daß bei einer Drehung des Messers 26 auch die Welle 32 in Drehung versetzt wird.

Auf der Welle 32 sitzt ein Axiallüfterrad 42, das über eine untere Öffnung 44 im Gehäuse mit einem Saugschlauch 46 verbunden ist. Das Lüfterrad 42 ist so angeordnet, daß es bei der vorgegebenen Drehung des Messers 16 Luft in Richtung der nach oben gerichteten Pfeile ansaugt. Damit auch bei entgegengesetzter Drehrichtung des Messers das gezeigte Prinzip anwendbar ist, ist entweder das Lüfterrad 42 umdrehbar auf der Welle 32 angebracht oder die Welle 32 kann in umgekehrter Richtung in das Lager 28 eingesteckt werden. Zu diesem Zweck müßte dann die Aufnahme 32 entfernbar sein, damit sie am anderen Ende angebracht werden kann.

Es versteht sich, daß verschieden bemessene Adapter 40 vorgesehen werden können, um unterschiedlich geformte Messer 16 aufnehmen zu können.

Über den Saugschlauch 46 wird in noch zu zeigender Weise Laub vom Boden angesaugt und einmal vom Lüfterrad 42 und zum anderen auch vom Messer 16 gehäckselt; es gelangt auf diese Weise zerkleinert in den Fangkorb 22.

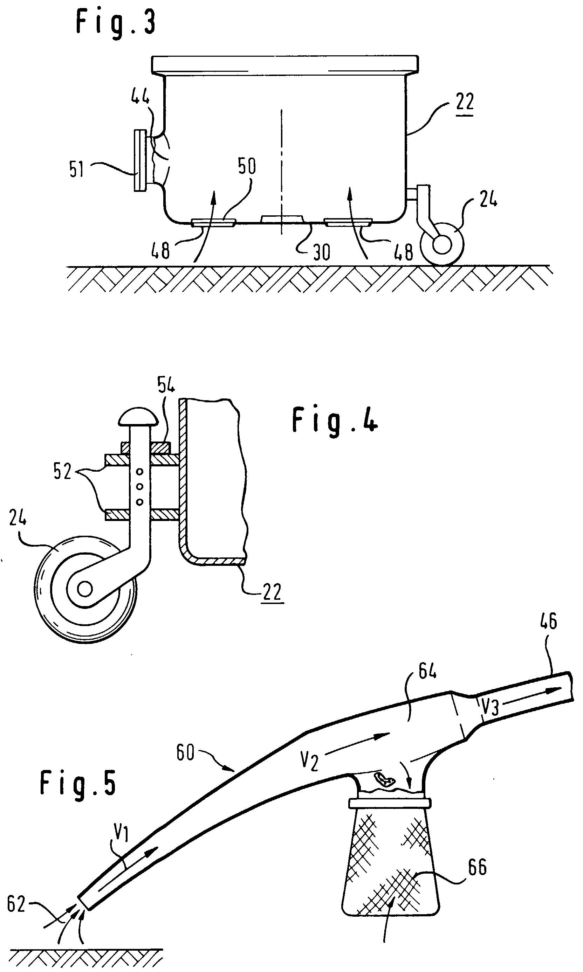

In Fig. 3 ist das Gehäuse 22 gezeigt, bei dem zusätzlich Bodenansaugöffnungen 48 vorgesehen sind, die mittels Schieberelementen 50 oder dergleichen wahlweise geöffnet oder verschlossen werden können. Die Ansaugöffnung bzw. der Stutzen 44 kann durch eine geeignete Kappe 50 verschlossen werden. In diesem Fall arbeitet der gezeigte Laubsauger als Flächensauger.

In Fig. 4 ist eine Laufrolle 24 vergrößert dargestellt. Wie erkennbar, ist sie am Gehäuse 22, das zwei seitliche Ansätze 52 aufweist, in der Höhe verstellbar gelagert. Die Höhenverstellung kann in einzelnen Stufen erfolgen. Außerdem ist ein Mittel 54 vorgesehen, um die Rolle 24 in einer vorgegebenen Winkelstellung festzusetzen.

In Fig. 5 ist eine Blasdüse 60 dargestellt, mit der Laub vom Boden aufgesaugt werden kann, wie durch die Pfeile 62 angedeutet. Wie erkennbar, ist der Strömungsquerschnitt der Düse 60 in einem mittleren Bereich bei 64 größer. In dem im Querschnitt vergrößerten Bereich ist unterhalb der Düse 60 ein Auffangbehälter 66 lösbar angebracht. Wie erkennbar, ist die Geschwindigkeit V2 im Bereich des Auffangbehälters 66 kleiner als im vorderen Bereich, wie durch V1 angegeben und auch kleiner als im Bereich dahinter. Die Strömungsverlangsamung führt daher dazu, daß schwerere Teile aus Stein, Glas oder Metall in den Sammelbehälter 66 fallen. Dieser kann von Zeit zu Zeit entleert werden.

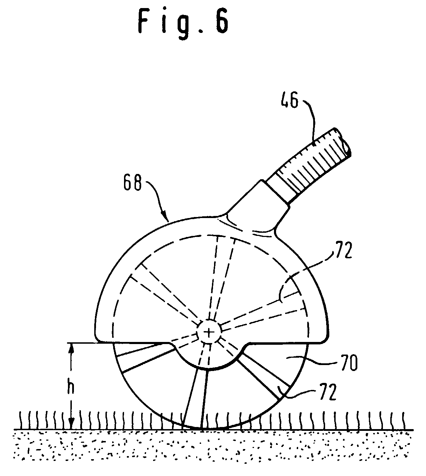

In Fig. 6 ist eine Saugdüse 68 gezeigt, die haubenartig ausgeführt ist mit einem Rad 70, das in Gebrauchslage um eine horizontale Achse drehbar gelagert und mit radialen Rippen 72 versehen ist. Mit dem Rad 70 rollt die Düse 64 über dem Boden und kann auf diese Weise einen gleichen Abstand zum Untergrund behalten.

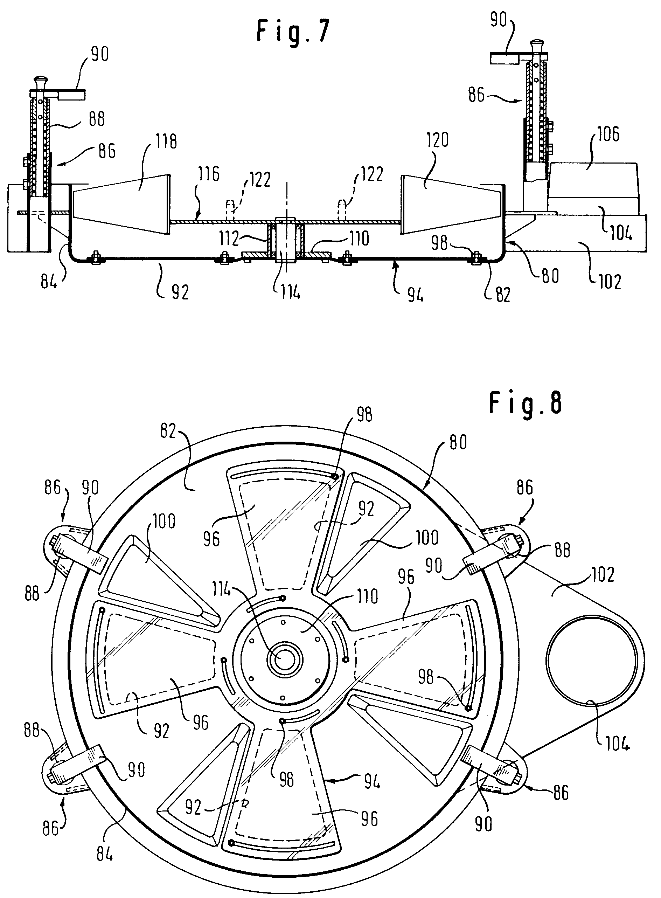

In Fig. 7 ist ein relativ flaches Gehäuse 80 zu erkennen mit einem Boden 82 und einer Seitenwand 84. Wie aus Fig. 8 zu erkennen, ist das Gehäuse 80 kreisförmig, und an vier Punkten des Umfangs sind Befestigungsvorrichtungen 86 angebracht, die eine höhenverstellbare Säule 88 und einen Greifarm 90 aufweisen. Wie aus Fig. 7 zu erkennen, können die Säulen 88 gegen die Kraft einer Feder teleskopisch verlängert werden (rechte Darstellung von Fig. 7), um ein nicht gezeigtes Gehäuse oder eine Haube eines Rasenmähers von oben federnd zu ergreifen. Die Säulen 88 befinden sich dabei am Umfang der Haube des nicht gezeigten Rasenmähers.

Im Boden 82 sind vier um 90° versetzte Öffnungen zu erkennen, die gestrichelt gezeichnet und verdeckt sind von einem Schieber 94, der um die Mitte des Bodens 82 verdrehbar gelagert ist und mit entsprechenden Armen 96 die Öffnungen 92 wahlweise überdeckt oder freigibt. Zu diesem Zweck sind Schlitze in den Armen vorgesehen, mit denen am Boden 82 angebrachte Schrauben 98 zusammenwirken, um die begrenzte Verschwenkung und damit eine wahlweise Freigabe der Öffnungen 92 zu bewerkstelligen. Versteifungen 100 zwischen den Öffnungen 92 stabilisieren den Boden 82.

An einer Seite der Seitenwand 84 ist ein dreieckförmiger, hohler Stutzen 102 angeformt, der mit dem Inneren des Gehäuses 80 verbunden und an dessen Oberseite ein kreisförmiger Stutzen 104, der nach oben weist, angeformt ist und der in Fig. 7 durch eine Kappe 106 verschlossen ist. An den Stutzen 104 kann ein Schlauch angeschlossen werden, vergleichbar einem Saugschlauch in der Ausführungsform nach Fig. 1 oder 2.

Auf dem Boden 82 ist in der Mitte eine Platte 110 verschraubt, die ein Lager 112 hält für den Wellenstumpf 114 eines Sauglüfterrades 116, das innerhalb des Gehäuses 80 rotieren kann. Am Sauglüfterrad 116 sind an diametral gegenüberliegenden Enden Rotorblätter 118 bzw. 120 angebracht, die für einen entsprechenden Unterdruck unterhalb des Lüfterrades 116 sorgen. Daher kann Laub oder dergleichen wahlweise über den Stutzen 104 oder die unteren Öffnungen 92 angesaugt werden. Zwischen den Blättern 118, 120 sind Schraubenbolzen 122 angedeutet zwecks Verbindung mit dem Messer eines Rasenmähers, worauf weiter unten noch eingegangen wird.

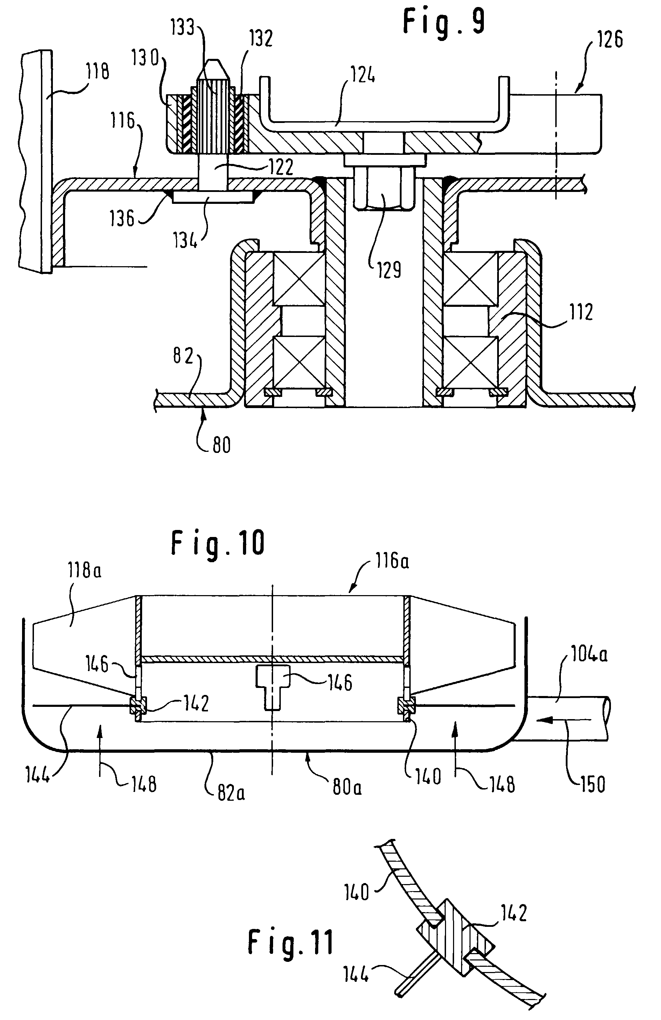

In Fig. 9 ist ein Messer 124 eines sonst nicht dargestellten Rasenmähers angedeutet. Die Längserstreckung des Messers 124 ist senkrecht zur Zeichenebene. Quer dazu ist ein Adapter 126 fest mit dem Messer verbunden, und zwar durch eine mittige Schraubverbindung 130. Der Adapter 126 befindet sich daher ständig am Messer 124, damit eine Anbringung des Sauglüfterrades 116 jederzeit möglich ist. Zu diesem Zweck weist der Adapter 126 Buchsen 130 auf, die entweder Schraubbuchsen sein können zwecks Aufnahme eines Schraubbolzens oder die, wie im konkreten Fall, eine innere Gummihülse 132 enthalten, in die ein Stift 122, der mit Längsrillen 132 versehen ist, reibend eingreifen kann. In diesem Fall ist ein Kopf 134 des Bolzens 122 mit der Unterseite des Lüfterrades 116 verschweißt, wie bei 136 angedeutet. Soll das Sauglüfterrad 116 mit dem Messer 114 verbunden werden, wird der Stift 122 in die Buchse 113 eingeführt und in dieser durch Reibschluß gehalten. Es versteht sich, daß auf der rechten Seite in Fig. 9 eine ähnliche Befestigungsanordnung vorgesehen ist. Ein einfaches Zusammenstecken der beschriebenen Teile bringt daher den Sauglüfter mit dem Rasenmäher zusammen, wobei dann nur noch die beschriebenen Befestigungsvorrichtungen 86 betätigt werden müssen, um eine komplette Verbindung herzustellen. Es versteht sich, daß die letztgenannte Verbindung auch zuerst hergestellt werden kann, um anschließend Messer und Sauglüfterrad 116 miteinander zu verbinden. Wie ebenfalls erwähnt, kann auch eine Schraubverbindung zwischen Adapter und Sauglüfterrad vorgenommen werden. Für diesen Fall ist dann aber notwendig, daß im Boden 82 eine entsprechende Öffnung vorgesehen ist zum Einführen eines Werkzeugs und Verdrehen eines Schraubenbolzens, der dann in eine Gewindebohrung des Adapters 126 eingeschraubt wird.

In Fig. 10 ist ein Gehäuse 80a angedeutet, das vergleichbar dem Gehäuse 80 ist. Auch der Stutzen 104a ist vergleichbar dem Stutzen 104 mit dem Gehäuse 80a unterhalb eines Sauglüfterrades 116a mit Saugblättern 118a verbunden. Die Besonderheit beim Sauglüfterrad 116a nach Fig. 10 besteht darin, daß es nach unten einen ringförmigen Bund 140 aufweist zur Aufnahme von Halteteilen 142 für Federdrähte 144. Das Teil 142 ist in Fig. 11 näher dargestellt. Es greift in ein schlüssellochartiges Loch 146 im Bund 140 ein und wird darin z.B. klemmend gehalten. Der Draht 144 oder eine Mehrzahl von Drähten, z.B. ein kleines Drahtbündel, werden bei der Drehung des Sauglüfterrades 116a mitgedreht. Sie dienen zum Häckseln des Laubes, das entweder von unten, wie durch Pfeil 148 angedeutet oder über den Stutzen 104a, wie durch Pfeil 150 angedeutet, angesaugt wird. Es versteht sich, daß auch andere Mittel zum Häckseln eingesetzt werden können, wie z.B. Schneiden oder dergleichen Mittel. Die Anbringung des Gehäuses 82a kann in ähnlicher Weise erfolgen wie beim Gehäuse 82 nach Fig. 7 und 8.

## Patentansprüche

1. Mobile Vorrichtung zum Ansaugen von Laub oder dergleichen Gut, mit einem Gehäuse, in dem ein Sauglüfterrad über eine Welle drehbar gelagert ist, einem mit der Welle verbindbaren Antriebsmotor, einer Ansaugöffnung im Gehäuse und einem mit dem Gehäuseinneren verbundenen Sammelraum für das Gut, der luftdurchlässige Wände aufweist, dadurch gekennzeichnet, daß das nach oben offene Gehäuse (22) Mittel zur Anbringung der Haube (12) eines auf das Gehäuse aufsetzbaren Rasenmähers (10) aufweist und ein Adapter (34, 40) vorgesehen ist zur Kopplung des Messers (16) des Rasenmähers (10) mit der Welle (32) bzw. dem Sauglüfterrad.

2. Vorrichtung nach Anspruch 1, dadurch gekennzeichnet, daß das Gehäuse an der oberen Außenseite einen umlaufenden Flansch (26) für die annähernd dichte Abstützung der Haube (12) des Rasenmähers (10) aufweist.

3. Vorrichtung nach Anspruch 1 oder 2, dadurch gekennzeichnet, daß Rasenmäherhaube (12) und Gehäuse (22) über am Gehäuse (22) angebrachte Befestigungsmittel lösbar miteinander verbindbar sind.

4. Vorrichtung nach einem der Ansprüche 1 bis 3, dadurch gekennzeichnet, daß der Adapter (40) so ausgebildet ist, daß das Rasenmähermesser (16) klauenartig von unten umfaßt ist.

5. Vorrichtung nach einem der Ansprüche 1 bis 4, dadurch gekennzeichnet, daß ein auf der Welle (32) sitzendes Axiallüfterrad (42) vorgesehen ist.

6. Vorrichtung nach einem der Ansprüche 1 bis 5, dadurch gekennzeichnet, daß das Gehäuse (22) über Rollen oder Räder (24) verfahrbar ist.

7. Vorrichtung nach einem der Ansprüche 1 bis 6, dadurch gekennzeichnet, daß das Gehäuse innerhalb der Umgrenzung angeordnet ist, die von den Rädern oder Rollen des Rasenmähers gebildet ist und das Gehäuse mittels das Gehäuse des Rasenmähers seitlich und von oben ergreifenden Befestigungsmitteln angebracht ist.

8. Vorrichtung nach Anspruch 7, dadurch gekennzeichnet, daß der Adapter fest mit dem Messer des Rasenmähers verschraubt ist und das Sauglüfterrad über eine Schraubverbindung mit dem Adapter verschraubt ist.

9. Vorrichtung nach Anspruch 7 oder 8, dadurch gekennzeichnet, daß das Sauglüfterrad über einen Wellenstumpf in einem Lager am Boden des Gehäuses drehbar gelagert ist.

10. Vorrichtung nach einem der Ansprüche 1 bis 9, dadurch gekennzeichnet, daß in der Bodenwand (30) des Gehäuses (22) mindestens eine verschließbare oder verstellbare Ansaugöffnung (48) vorgesehen ist.

11. Vorrichtung nach einem der Ansprüche 1 bis 10, dadurch gekennzeichnet, daß am Gehäuse (22) ein Schlauch (46) anschließbar ist, der am vorderen Ende eine Saugdüse (60) aufweist.

12. Vorrichtung nach Anspruch 11, dadurch gekennzeichnet, daß die Saugdüse zwischen ihren Enden einen Bereich größeren Querschnitts aufweist und an der Unterseite dieses Bereichs (64) ein Auffangbehälter (66) abnehmbar angebracht ist.

13. Vorrichtung nach Anspruch 12, dadurch gekennzeichnet, daß im Eingangsabschnitt der Saugdüse (68) ein Rad (70) oder dergleichen in der Gebrauchslage um eine horizontale Achse drehbar gelagert ist und seitlich am Rad radiale Rippen (72) oder dergleichen vorgesehen sind.

14. Vorrichtung nach einem der Ansprüche 1 bis 13, dadurch gekennzeichnet, daß unterhalb des Sauglüfterrades Mittel angebracht sind zum Häckseln des Laubs.

15. Vorrichtung nach Anspruch 14, dadurch gekennzeichnet, daß Schneiden, federnde Drähte oder dergleichen Mittel am Sauglüfterrad angebracht sind.
